# FASCICULE DE BREVET EUROPEEN

(11) **EP 2 238 289 B1**
(45) Date de publication et mention de la délivrance du brevet: **02.09.2015**
(21) Numéro de dépôt: 08869203.3
(22) Date de dépôt: 22.12.2008
(51) Int. Cl.: D07B 1/06, D07B 1/16

(54) **CÂBLE A COUCHES GOMME IN SITU UTILISABLE EN CEINTURE DE PNEUMATIQUE**
IN-SITU GUMMIERTES SCHICHTKABEL FÜR REIFENGÜRTEL
LAYERED CABLE GUMMED IN SITU SUITABLE FOR A TYRE BELT

(30) Priorité: 28.12.2007 FR 0709162
(43) Date de publication de la demande: 13.10.2010
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: POTTIER, Thibaud, F-63200 Malauzat (FR); BARGUET, Henri, F-63430 Les Martres-d'Artiere (FR)
(74) Mandataire: Ribière, Joel
(86) Numéro de dépôt international: PCT/EP2008/011000
(87) Numéro de publication internationale: WO 2009/083212

(56) Documents cités:
- EP-A- 1 186 699
- WO-A1-99/31313
- DE-A1-102004 036 807
- JP-A- 2004 036 027
- US-A- 5 139 874
- US-A- 5 609 014
- US-A1- 2002 160 213
- ANONYMOUS: "High tensile strength steel cord constructions for tyres", RESEARCH DISCLOSURE, MASON PUBLICATIONS, HAMPSHIRE, GB, vol. 340, no. 54, 1 August 1992 (1992-08-01), XP007118007, ISSN: 0374-4353

## Description

La présente invention est relative aux câbles métalliques à deux couches, de construction 3+N, utilisables notamment pour le renforcement d'articles en caoutchouc.

Elle est également relative aux câbles métalliques du type « gommés in situ », c'est-à-dire gommés de l'intérieur, pendant leur fabrication même, par du caoutchouc à l'état cru.

Elle se rapporte également aux pneumatiques et aux armatures de renforcement du sommet, encore appelées « ceintures », de ces pneumatiques, en particulier au renforcement des ceintures de pneumatiques pour véhicules industriels tels que véhicules poids-lourds.

Un pneumatique radial comporte de manière connue une bande de roulement, deux bourrelets inextensibles, deux flancs reliant les bourrelets à la bande de roulement et une ceinture disposée circonférentiellement entre l'armature de carcasse et la bande de roulement. Cette ceinture est constituée de diverses nappes (ou "couches") de caoutchouc renforcées ou non par des éléments de renforcement ("renforts") tels que des câblés ou des monofilaments, du type métalliques ou textiles.

La ceinture de pneumatique est généralement constituée d'au moins deux nappes de ceinture superposées, dites parfois nappes "de travail" ou nappes "croisées", dont les câbles de renforcement, en général métalliques, sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45° selon le type de pneumatique considéré. Les nappes croisées peuvent être complétées par diverses autres nappes ou couches de caoutchouc auxiliaires, de largeurs variables selon les cas, comportant ou non des renforts ; on citera à titre d'exemple de simples coussins de gomme, des nappes dites "de protection" chargées de protéger le reste de la ceinture des agressions externes, des perforations, ou encore des nappes dites "de frettage" comportant des renforts orientés sensiblement selon la direction circonférentielle (nappes dites "à zéro degré"), qu'elles soient radialement externes ou internes par rapport aux nappes croisées.

Une telle ceinture de pneumatique doit satisfaire de manière connue à différentes exigences, souvent contradictoires, notamment :
- être la plus rigide possible à faible déformation, car elle contribue d'une manière substantielle à rigidifier le sommet du pneumatique ;
- avoir une hystérèse aussi basse que possible, pour d'une part minimiser l'échauffement en roulage de la zone interne du sommet et d'autre part réduire la résistance au roulement du pneumatique, synonyme d'économie de carburant ;
- posséder enfin une endurance élevée, vis-à-vis en particulier du phénomène de séparation, fissuration des extrémités des nappes croisées dans la zone d'épaule du pneumatique, connu sous le terme de "clivage", ce qui exige notamment des câbles métalliques qui renforcent les nappes de ceinture de présenter une résistance élevée à la fatigue en compression, le tout dans une atmosphère plus ou moins corrosive.

La troisième exigence est particulièrement forte pour les enveloppes de pneumatiques pour véhicules industriels tels que véhicules poids-lourds, conçues pour pouvoir être rechapées une ou plusieurs fois lorsque les bandes de roulement qu'elles comportent atteignent un degré d'usure critique après un roulage prolongé.

Pour le renforcement des ceintures ci-dessus, on utilise généralement des câbles d'acier ("*steel cords*") dits "à couches" (*"layered cords"*) constitués d'une âme centrale et d'une ou plusieurs couches de fils concentriques disposées autour de cette âme. Les câbles à couches les plus utilisés sont essentiellement des câbles de construction M+N ou M+N+P, formés d'une âme de M fil(s) entourée d'au moins une couche de N fils éventuellement elle-même entourée d'une couche externe de P fils, les M, N voire P fils ayant généralement le même diamètre pour des raisons de simplification et de coût.

La disponibilité en aciers au carbone de plus en plus résistants et endurants fait que les manufacturiers de pneumatiques s'orientent aujourd'hui, autant que possible, vers l'emploi de câbles ayant seulement deux couches, afin notamment de simplifier la fabrication de ces câbles, diminuer l'épaisseur des nappes composites de renforcement et ainsi l'hystérèse des pneumatiques, en fin de compte diminuer les coûts des pneumatiques eux-mêmes et réduire la consommation d'énergie des véhicules équipés de tels pneumatiques.

Pour toutes les raisons exposées ci-dessus, les câbles à deux couches les plus utilisés aujourd'hui dans les ceintures de pneumatiques sont essentiellement des câbles de construction 3+N constitués d'une âme ou couche interne de 3 fils et d'une couche externe de N fils (par exemple, de 8 ou 9 fils). La couche externe est relativement désaturée grâce au diamètre élevé de la couche interne apporté par la présence des trois fils d'âme, d'autant plus lorsque le diamètre des fils d'âme est choisi supérieur à celui des fils de la couche externe.

Ce type de construction favorise, on le sait, la pénétrabilité externe du câble par la gomme de calandrage du pneumatique ou autre article en caoutchouc lors de la cuisson de ces derniers, et par voie de conséquence permet d'améliorer l'endurance des câbles en fatigue et fatigue-corrosion, particulièrement vis-à-vis du problème de clivage décrit précédemment.

Par ailleurs, une bonne pénétration du câble par du caoutchouc permet de manière connue, grâce à un volume d'air emprisonné dans le câble qui est moindre, de réduire les temps de cuisson des pneumatiques ("durée sous presse").

Les câbles de construction 3+N ont toutefois pour inconvénient qu'ils ne sont pas pénétrables jusqu'à coeur à cause de la présence d'un canal ou capillaire au centre des trois fils d'âme, qui reste vide après imprégnation par le caoutchouc et donc propice, par une sorte d'effet "de mèche", à la propagation de milieux corrosifs tels que l'eau. Cet inconvénient des câbles de construction 3+N est bien connu, il a été exposé par exemple dans les demandes de brevet WO 01/00922, WO 01/49926, WO 2005/071157, WO 2006/013077.

Pour résoudre le problème ci-dessus, on a proposé d'ouvrir la couche interne Ci, en écartant ses fils, grâce à un fil noyau unitaire (ou "*core wire*") et de supprimer un fil de la couche externe ; le câble ainsi obtenu, de construction 1+3+(N-1), devient pénétrable de l'extérieur jusqu'en son centre. Relativement aux fils de la couche interne, le fil noyau ne doit être ni trop fin, sans quoi il ne produit pas l'effet de désaturation qui est visé, ni trop gros sans quoi le fil ne reste pas au centre du câble. Typiquement, on emploie par exemple un fil noyau de 0,12 mm de diamètre pour des fils de couche Ci et Ce de diamètre 0,35 mm (voir par exemple RD (*Research Disclosure*) August 1990, No 316107, *"Steel cord construction"*)*.*

Cette solution est tout d'abord coûteuse puisqu'elle nécessite d'ajouter un fil qui ne contribue pas par ailleurs à la résistance du câble ; elle se heurte en outre à un problème de fabrication : une tension élevée sur le fil noyau est nécessaire pour maintenir le fil au centre du câble lors du câblage, tension qui peut dans certains cas approcher la force à la rupture du fil. Enfin, la suppression d'un fil externe a pour conséquence de réduire encore la résistance du câble par unité de section.

Toujours pour résoudre ce problème de pénétrabilité jusqu'à coeur des câbles 3+N, la demande de brevet US 2002/160213 a quant à elle proposé la réalisation de câbles du type gommés in situ. Le procédé proposé ici consiste à gainer individuellement (c'est-à-dire isolément, "fil à fil") avec du caoutchouc à l'état cru, en amont du point d'assemblage des trois fils (ou point de torsion), un seul ou préférentiellement chacun des trois fils pour l'obtention d'une couche interne gainée de caoutchouc, avant la mise en place ultérieure des N fils de la couche externe par câblage autour de la couche interne ainsi gainée.

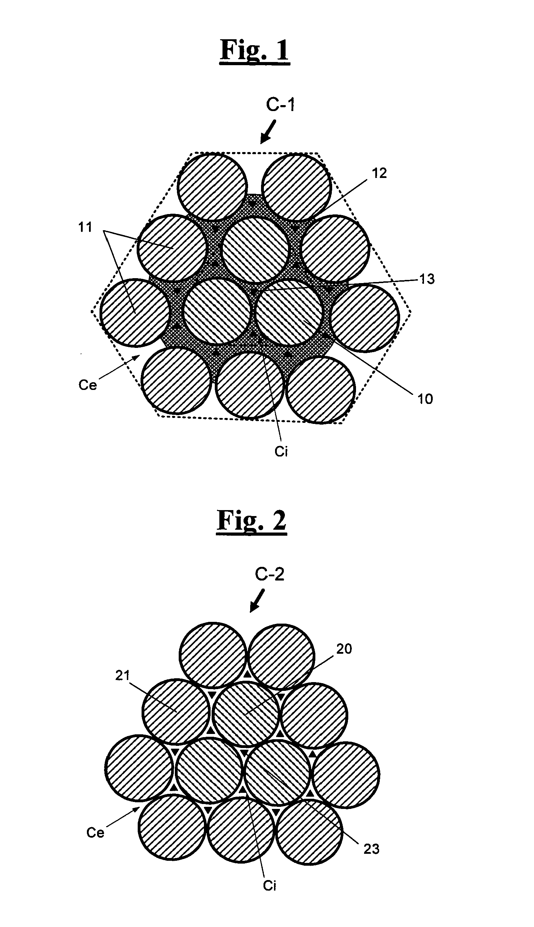

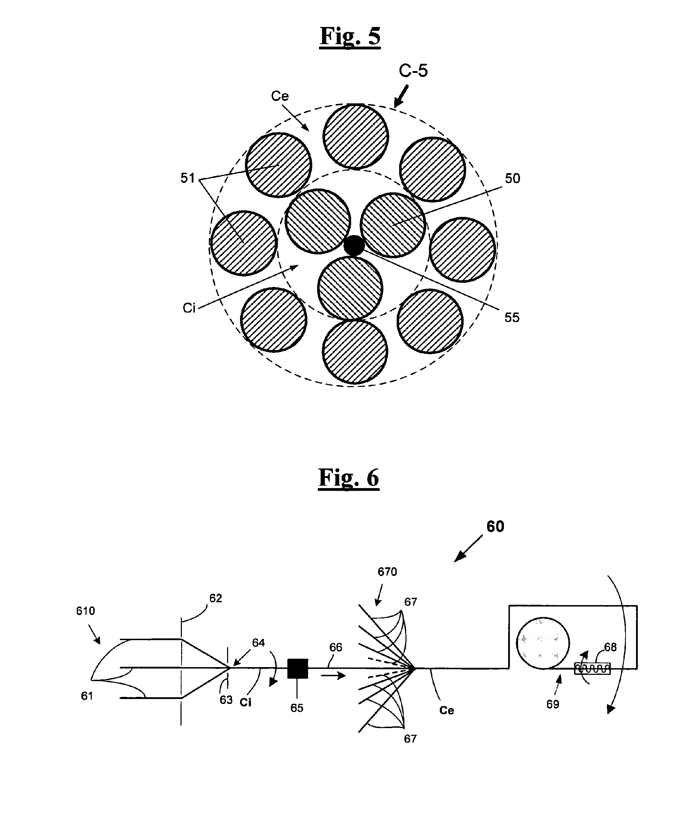

Le procédé proposé ci-dessus pose de nombreux problèmes. Tout d'abord le gainage d'un seul fil sur trois (comme illustré par exemple aux figures 11 et 12 de ce document), ne permet pas de garantir un remplissage suffisant par la gomme du câble final, et donc d'obtenir une résistance à la corrosion satisfaisante. Ensuite, le gainage fil à fil de chacun trois fils (comme illustré par exemple aux figures 2 et 5 de ce document), s'il conduit effectivement à un remplissage du câble, conduit à l'emploi d'une quantité trop importante de gomme. Le débordement de gomme à la périphérie du câble final devient alors rédhibitoire dans des conditions de câblage et gommage industrielles.

En raison du très fort pouvoir collant du caoutchouc à l'état cru, le câble ainsi gommé devient inutilisable en raison d'un effet collant parasite sur les outils de fabrication ou entre les spires de câble lors de l'enroulage de ce dernier sur une bobine de réception, sans parler de l'impossibilité finale de calandrer correctement le câble. On rappelle ici que le calandrage consiste à transformer le câble, par incorporation entre deux couches de caoutchouc à l'état cru, en un tissu caoutchouté métallique servant de produit semi-fini pour toute fabrication ultérieure, par exemple pour la confection d'un pneumatique.

Un autre problème posé par le gainage isolé de chacun des trois fils est l'encombrement important imposé par l'emploi de trois têtes d'extrusion. En raison d'un tel encombrement, la fabrication de câbles à couches cylindriques (c'est-à-dire à pas p₁ et p₂ différents d'une couche à l'autre, ou à pas p₁ et p₂ identiques mais avec des sens de torsion différents d'une couche à l'autre) doit être nécessairement réalisée en deux opérations discontinues : (i) gainage individuel des fils puis câblage et enroulage de la couche interne dans un premier temps, (ii) câblage de la couche externe autour de la couche interne dans un deuxième temps. Toujours en raison du fort pouvoir collant du caoutchouc à l'état cru, l'enroulement et le stockage intermédiaire de la couche interne exigent l'emploi d'intercalaires ainsi que des pas de trancannage importants lors de l'enroulement sur bobine intermédiaire, pour éviter un collage parasite entre les couches bobinées ou entre les spires d'une même couche.

Toutes les contraintes ci-dessus sont fortement pénalisantes du point de vue industriel et antinomiques de la recherche de cadences de fabrication élevées.

Poursuivant leurs recherches, les Demanderesses ont découvert un câble à couches 3+N nouveau, gommé in situ, dont la structure spécifique obtenue grâce à un procédé de fabrication particulier, permet de pallier les inconvénients précités.

En conséquence, un premier objet de l'invention est un câble métallique à deux couches (Ci, Ce) de construction 3+N, gommé in situ, comportant une couche interne (Ci) constitué de trois fils d'âme de diamètre d₁ enroulés ensemble en hélice selon un pas p₁ et une couche externe (Ce) de N fils, N variant de 6 à 12, de diamètre d₂ enroulés ensemble en hélice selon un pas p₂ autour de la couche interne (Ci), ledit câble étant caractérisé en ce qu'il présente les caractéristiques suivantes (d₁, d₂, p₁, p₂ sont exprimés en mm) :
- 0,20 < d₁ < 0,50 ;
- 0,20 < d₂ < 0,50 ;
- p₁ / p₂ ≤ 1 ;
- 5 < p₁ < 30 ;
- 10 < p₂ < 30 ;
- la couche interne est gainée par une composition de caoutchouc diénique dite "gomme de remplissage" qui, pour toute longueur de câble d'au moins 2 cm, est présente dans le canal central formé par les trois fils d'âme et dans chacun des interstices situés entre les trois fils d'âme et les N fils de la couche externe (Ce) ;
- le taux de gomme de remplissage dans le câble est compris entre 5 et 30 mg par g de câble ;
- le câble est dépourvu de gomme de remplissage à sa périphérie.

L'invention concerne également l'utilisation d'un tel câble pour le renforcement d'articles ou de produits semi-finis en caoutchouc, par exemple des nappes, des tuyaux, des courroies, des bandes transporteuses, des pneumatiques.

Le câble de l'invention est tout particulièrement destiné à être utilisé comme élément de renforcement d'une ceinture de pneumatique destiné à des véhicules industriels choisis parmi camionnettes, véhicules "poids lourd" - i.e., métro, bus, engins de transport routier (camions, tracteurs, remorques), véhicules hors-la-route -, engins agricoles ou de génie civil, autres véhicules de transport ou de manutention.

L'invention concerne en outre ces articles ou produits semi-finis en caoutchouc eux-mêmes lorsqu'ils sont renforcés par un câble conforme à l'invention, en particulier les pneumatiques destinés aux véhicules industriels tels que camionnettes ou poids lourd.

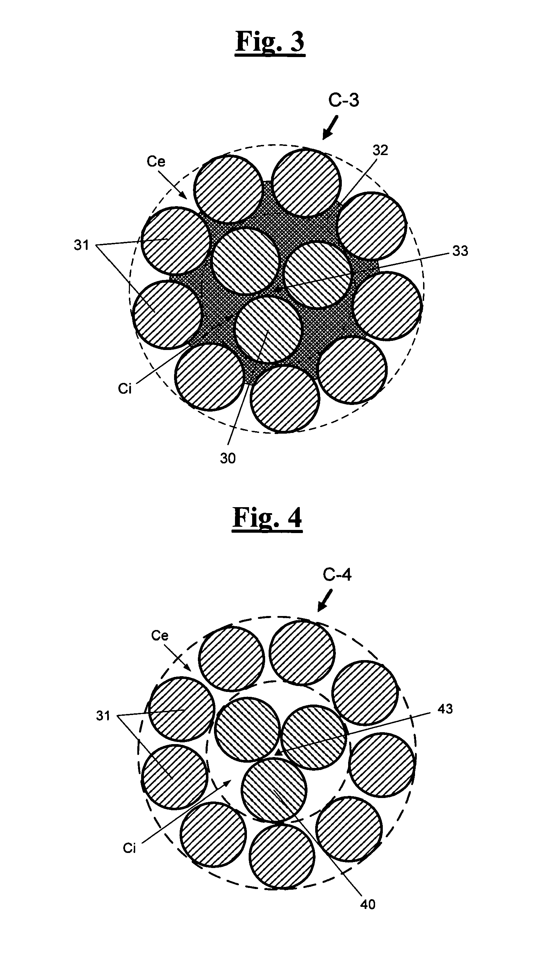

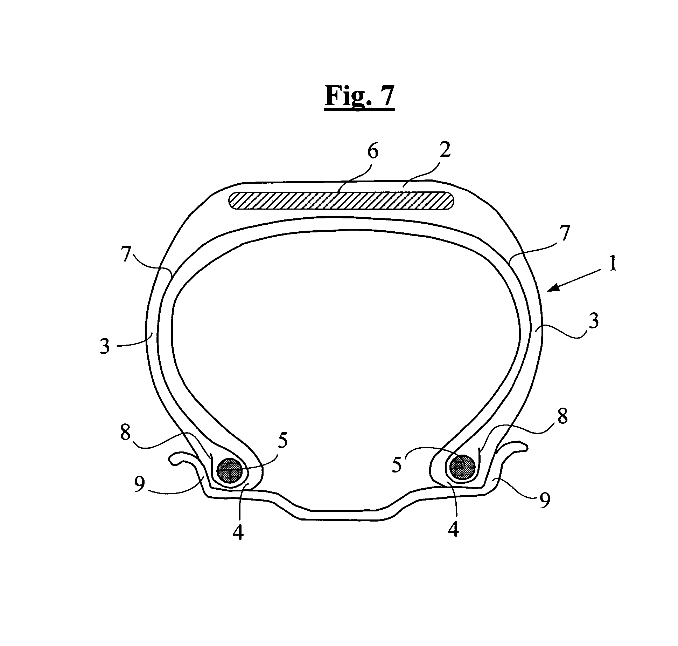

L'invention ainsi que ses avantages seront aisément compris à la lumière de la description et des exemples de réalisation qui suivent, ainsi que des figures 1 à 7 relatives à ces exemples qui schématisent, respectivement :
- en coupe transversale, un câble de construction 3+9 conforme à l'invention, du type compact (Fig. 1) ;
- en coupe transversale, un câble de construction 3+9 conventionnel, également du type compact (Fig. 2) ;
- en coupe transversale, un câble de construction 3+9 conforme à l'invention, du type à couches cylindriques (Fig. 3) ;
- en coupe transversale, un câble de construction 3+9 conventionnel, également du type à couches cylindriques (Fig. 4) ;
- en coupe transversale, un autre câble conventionnel, du type à couches cylindriques, de construction 1+3+8 avec un fil noyau de très faible diamètre (Fig. 5) ;
- un exemple d'installation de retordage et gommage in situ utilisable pour la fabrication de câbles du type compacts conformes à l'invention (Fig. 6) ;
- en coupe radiale, une enveloppe de pneumatique poids lourd à armature de carcasse radiale, conforme ou non à l'invention dans cette représentation générale (Fig. 7).

### I. MESURES ET TESTS

### I-1. Mesures dynamométriques

Pour ce qui concerne les fils et câbles métalliques, les mesures de force à la rupture notée Fm (charge maximale en N), de résistance à la rupture notée Rm (en MPa) et d'allongement à la rupture noté At (allongement total en %) sont effectuées en traction selon la norme ISO 6892 de 1984.

Concernant les compositions de caoutchouc, les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté E10 et exprimé en MPa (conditions normales de température et d'hygrométrie selon la norme ASTM D 1349 de 1999).

### I-2. Test de perméabilité à l'air

Ce test permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est ici réalisé soit sur des câbles extraits des pneumatiques ou des nappes de caoutchouc qu'ils renforcent, donc déjà enrobés de caoutchouc à l'état cuit, soit sur des câbles bruts de fabrication.

Dans le second cas, les câbles bruts doivent être préalablement enrobés de l'extérieur par une gomme dite d'enrobage. Pour cela, une série de 10 câbles disposés parallèlement (distance inter-câble : 20 mm) est placée entre deux skims (deux rectangles de 80 x 200 mm) d'une composition de caoutchouc à l'état cru, chaque skim ayant une épaisseur de 3,5 mm ; le tout est alors bloqué dans un moule, chacun des câbles étant maintenu sous une tension suffisante (par exemple 2 daN) pour garantir sa rectitude lors de la mise en place dans le moule, à l'aide de modules de serrage ; puis on procède à la vulcanisation (cuisson) pendant 40 min à une température de 140°C et sous une pression de 15 bar (piston rectangulaire de 80 x 200 mm). Après quoi, on démoule l'ensemble et on découpe 10 éprouvettes de câbles ainsi enrobés, sous forme de parallélépipèdes de dimensions 7x7x20 mm, pour caractérisation.

On utilise comme gomme d'enrobage une composition de caoutchouc conventionnelle pour pneumatique, à base de caoutchouc naturel (peptisé) et de noir de carbone N330 (65 pce), comportant en outre les additifs usuels suivants: soufre (7 pce), accélérateur sulfénamide (1 pce), ZnO (8 pce), acide stéarique (0,7 pce), antioxydant (1,5 pce), naphténate de cobalt (1,5 pce) ; le module E10 de la gomme d'enrobage est de 10 MPa environ.

Le test est réalisé sur 2 cm de longueur de câble, enrobé donc par sa composition de caoutchouc (ou gomme d'enrobage) environnante, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche est contrôlée préalablement à l'aide d'une éprouvette de caoutchouc pleine, c'est-à-dire sans câble.

Le débit d'air moyen mesuré (moyenne sur les 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

### I-3. Taux de gomme de remplissage

La quantité de gomme de remplissage est mesurée par différence entre le poids du câble initial (donc gommé in situ) et le poids du câble (donc celui de ses fils) dont la gomme de remplissage a été éliminée par un traitement électrolytique approprié.

Un échantillon de câble (longueur 1 m), bobiné sur lui-même pour réduire son encombrement, constitue la cathode d'un électrolyseur (reliée à la borne négative d'un générateur), tandis que l'anode (reliée à la borne positive) est constituée d'un fil de platine. L'électrolyte consiste en une solution aqueuse (eau déminéralisée) comportant 1 mole par litre de carbonate de sodium. L'échantillon, plongé complètement dans l'électrolyte, est mis sous tension pendant 15 min sous un courant de 300 mA. Le câble est ensuite retiré du bain, rincé abondamment avec de l'eau. Ce traitement permet à la gomme de se détacher facilement du câble (si ce n'est pas le cas, on continue l'électrolyse pendant quelques minutes). On élimine soigneusement la gomme, par exemple par simple essuyage à l'aide d'un tissu absorbant, tout en détordant un à un les fils du câble. Les fils sont de nouveau rincés à l'eau puis plongés dans un bécher contenant un mélange d'eau déminéralisée (50%) et d'éthanol (50%) ; le bécher est plongé dans une cuve à ultrasons pendant 10 min. Les fils ainsi dépourvus de toute trace de gomme sont retirés du bécher, séchés sous un courant d'azote ou d'air, et enfin pesés.

On en déduit par le calcul le taux de gomme de remplissage dans le câble, exprimé en mg (milligramme) de gomme de remplissage par g (gramme) de câble initial, et moyenné sur 10 mesures (c'est-à-dire sur 10 mètres de câble au total).

### II. DESCRIPTION DETAILLEE DE L'INVENTION

Dans la présente description, sauf indication expresse différente, tous les pourcentages (%) indiqués sont des % massiques.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II-1. Câble 3+N de l'invention

Le câble métallique à deux couches (Ci, Ce) de l'invention, de construction 3+N, comporte donc :
- une couche interne (Ci) constituée de trois fils d'âme de diamètre d₁ enroulés ensemble en hélice selon un pas p₁ ; et
- une couche externe (Ce) de N fils, N variant de 6 à 12, de diamètre d₂ enroulés ensemble en hélice selon un pas p₂ autour de la couche interne (Ci).

Il présente en outre les caractéristiques essentielles suivantes :
- 0,20 mm < d₁ < 0,50 mm ;
- 0,20 mm < d₂ < 0,50 mm;
- p₁ / p₂ ≤ 1 ;
- 5 mm < p₁ < 30 mm ;
- 10 mm < p₂ < 30 mm ;
- la couche interne est gainée par une composition de caoutchouc diénique dite "gomme de remplissage" qui, pour toute longueur de câble de 2 cm ou plus, est présente dans le canal central formé par les trois fils d'âme et dans chacun des interstices ou capillaires situés entre les trois fils d'âme et les N fils de la couche externe (Ce) ;
- le taux de gomme de remplissage dans le câble est compris entre 5 et 30 mg par g de câble ;
- le câble est dépourvu de gomme de remplissage à sa périphérie.

Ce câble de l'invention peut ainsi être qualifié de câble gommé in situ : sa couche interne Ci et sa couche externe Ce sont séparées radialement par une gaine de gomme de remplissage qui remplit, au moins en partie, chacun des interstices ou cavités présents entre la couche interne Ci et la couche externe Ce. En outre, son capillaire central formé par les trois fils de la couche interne est lui aussi pénétré par de la gomme de remplissage.

Le câble de l'invention a pour autre caractéristique essentielle que son taux de gomme de remplissage est compris entre 5 et 30 mg de gomme par g de câble.

En dessous du minimum indiqué, il n'est pas possible de garantir que, pour toute longueur de câble d'au moins 2 cm, la gomme de remplissage soit bien présente, au moins en partie, dans chacun des interstices du câble, tandis qu'au-delà du maximum indiqué, on s'expose aux différents problèmes précédemment décrits dus au débordement de la gomme de remplissage à la périphérie du câble. Pour toutes ces raisons, on préfère que le taux de gomme de remplissage soit compris entre 5 et 25 mg, plus préférentiellement encore compris dans un domaine de 10 à 20 mg par g de câble.

Un tel taux de gomme de remplissage et son contrôle dans les limites indiquées ci-dessus n'est rendu possible que grâce à la mise en oeuvre d'un procédé de retordage-gommage spécifique, adapté à la géométrie du câble 3+N, qui sera exposé en détail ultérieurement.

La mise en oeuvre de ce procédé spécifique, tout en permettant l'obtention d'un câble dont la quantité de gomme de remplissage est maîtrisée, garantit la présence de cloisons internes (continues ou discontinues dans l'axe du câble) ou bouchons de gomme dans le câble de l'invention, notamment dans son canal central, en nombre suffisant ; ainsi, le câble de l'invention devient étanche à la propagation, le long du câble, de tout fluide corrosif tel que l'eau ou l'oxygène de l'air, supprimant ainsi l'effet de mèche décrit en introduction du présent mémoire.

Selon un mode de réalisation particulièrement préférentiel de l'invention, la caractéristique suivante est vérifiée : sur toute longueur de câble d'au moins 2 cm, le câble est étanche ou pratiquement étanche à l'air dans la direction longitudinale. En d'autres termes, chaque capillaire (ou cavité) du câble 3+N, y compris le canal central formé par les trois fils d'âme, comporte au moins un bouchon (ou cloison interne) de gomme de remplissage tous les 2 cm, de telle manière que ledit câble (une fois enrobé de l'extérieur par un polymère tel que du caoutchouc) est étanche ou pratiquement étanche à l'air dans sa direction longitudinale.

Au test de perméabilité à l'air décrit au paragraphe 1-2, un câble 3+N dit "étanche à l'air" est caractérisé par un débit d'air moyen inférieur ou au plus égal à 0,2 cm³/min tandis qu'un câble 3+N dit "pratiquement étanche à l'air" est caractérisé par un débit d'air moyen inférieur à 2 cm³/min, de préférence inférieur à 1 cm³/min.

Pour un compromis optimisé entre résistance, faisabilité, rigidité et endurance en compression du câble, on préfère que les diamètres des fils des couches Ci et Ce, que ces fils aient un diamètre identique ou non d'une couche à l'autre, soient compris dans un domaine de 0,23 à 0,40 mm.

Les fils des couches Ci et Ce peuvent avoir un diamètre identique ou différent d'une couche à l'autre. On utilise de préférence des fils de même diamètre d'une couche à l'autre (soit d₁ = d₂), ce qui simplifie notamment leur fabrication et réduit leur coût.

De préférence, on a la relation suivante qui est vérifiée: 0,5 ≤ p₁ / p₂ ≤ 1 .

On rappelle ici que de manière connue le pas « p » représente la longueur, mesurée parallèlement à l'axe du câble, au bout de laquelle un fil ayant ce pas effectue un tour complet autour dudit axe du câble.

Plus préférentiellement encore, les p₁ et p₂ sont égaux (p₁ = p₂). C'est notamment le cas pour des câbles à couches du type compacts tels que décrits par exemple à la figure 1, dans lesquels les deux couches Ci et Ce ont pour autre caractéristique d'être enroulées dans le même sens de torsion (S/S ou Z/Z). Dans de tels câbles à couches compacts, la compacité est telle que pratiquement aucune couche distincte de fils n'est visible ; il en résulte que la section transversale de tels câbles a un contour qui est polygonal et non cylindrique, comme illustré par exemple sur la figure 1 (câble compact 3+9 conforme à l'invention) ou à la figure 2 (câble compact 3+9 témoin, c'est-à-dire non gommé in situ).

Le pas p₂ est choisi plus préférentiellement dans un domaine de 12 à 25 mm, par exemple dans un domaine de 15 à 22 mm, en particulier lorsque d₁ = d₂.

La couche externe Ce a pour caractéristique préférentielle d'être une couche saturée, c'est-à-dire que, par définition, il n'existe pas suffisamment de place dans cette couche pour y ajouter au moins un (Nₘₐₓ+1)ème fil de diamètre d₂, Nₘₐₓ représentant le nombre maximal de fils enroulables en une couche autour de la couche interne Ci. Cette construction a pour avantage de limiter le risque de débordement de gomme de remplissage à sa périphérie et d'offrir, pour un diamètre donné du câble, une résistance plus élevée.

Ainsi, le nombre N de fils peut varier dans une très large mesure selon le mode de réalisation particulier de l'invention, par exemple de 6 à 12 fils, étant entendu que le nombre maximal Nₘₐₓ de fils sera augmenté si leur diamètre d₂ est réduit comparativement au diamètre d₁ des fils d'âme, afin de conserver préférentiellement la couche externe dans un état saturé.

Selon un mode préférentiel, la couche Ce comporte de 8 à 10 fils, en d'autres termes le câble de l'invention est choisi dans le groupe des câbles de constructions 3+8, 3+9 et 3+10. Plus préférentiellement, les fils de la couche Ce vérifient alors les relations suivantes :
- pour N = 8 : 0,7 ≤ (d₁ / d₂) ≤ 1 ;
- pour N = 9 : 0,9 ≤ (d₁ / d₂) ≤ 1,2 ;
- pour N = 10 : 1,0 ≤ (d₁ / d₂) ≤ 1,3.

Sont particulièrement sélectionnés parmi les câbles ci-dessus ceux constitués de fils ayant sensiblement le même diamètre d'une couche à l'autre (soit d₁ = d₂).

Selon un mode de réalisation particulièrement préférentiel, la couche externe comporte 9 fils.

Le câble 3+N de l'invention, comme tous les câbles à couches, peut être de deux types, à savoir du type compact ou du type à couches cylindriques.

Préférentiellement, tous les fils des couches Ci et Ce sont enroulés dans le même sens de torsion, c'est-à-dire soit dans la direction S (disposition "S/S"), soit dans la direction Z (disposition "Z/Z"). L'enroulement dans le même sens des couches Ci et Ce permet avantageusement de minimiser les frottements entre ces deux couches et donc l'usure des fils qui les constituent.

Plus préférentiellement encore, les deux couches sont enroulées dans le même sens (S/S ou Z/Z) et au même pas (p₁ / p₂), pour l'obtention d'un câble du type compact tel que représenté par exemple à la figure 1.

Par câble métallique, on entend par définition dans la présente demande un câble formé de fils constitués majoritairement (c'est-à-dire pour plus de 50% en nombre de ces fils) ou intégralement (pour 100% des fils) d'un matériau métallique. Les fils de la couche Ci sont préférentiellement en acier, plus préférentiellement en acier au carbone. Indépendamment, les fils de la couche Ce sont eux-mêmes en acier, de préférence en acier au carbone. Mais il est bien entendu possible d'utiliser d'autres aciers, par exemple un acier inoxydable, ou d'autres alliages. Lorsqu'un acier au carbone est utilisé, sa teneur en carbone est de préférence comprise entre 0,4% et 1,2%, notamment entre 0,5% et 1,1%. Elle est plus préférentiellement comprise entre 0,6% et 1,0% (% en poids d'acier), une telle teneur représentant un bon compromis entre les propriétés mécaniques requises pour le composite et la faisabilité des fils.

Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc ; on rappelle que lors du procédé de fabrication des fils, le revêtement de laiton ou de zinc facilite le tréfilage du fil, ainsi que le collage du fil avec le caoutchouc. Mais les fils pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Les câbles de l'invention sont préférentiellement en acier au carbone et possèdent une résistance en traction (Rm) de préférence supérieure à 2500 MPa, plus préférentiellement supérieure à 3000 MPa. L'allongement total à la rupture (At) du câble, somme de ses allongements structural, élastique et plastique, est de préférence supérieur à 2,0%, plus préférentiellement au moins égal à 2,5%.

L'élastomère diénique (ou indistinctement "caoutchouc", les deux étant considérés comme synonymes) de la gomme de remplissage est préférentiellement un élastomère diénique choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères. De tels copolymères sont plus préférentiellement choisis dans le groupe constitué par les copolymères de butadiène-styrène (SBR), que ces derniers soient préparés par polymérisation en émulsion (ESBR) comme en solution (SSBR), les copolymères d'isoprène-butadiène (BIR), les copolymères d'isoprène-styrène (SIR) et les copolymères d'isoprène-butadiène-styrène (SBIR).

Un mode de réalisation préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

La gomme de remplissage peut contenir un seul ou plusieurs élastomère(s) diénique(s), ce dernier ou ces derniers pouvant être utilisé(s) en association avec tout type d'élastomère synthétique autre que diénique, voire avec des polymères autres que des élastomères.

La gomme de remplissage est du type réticulable, c'est-à-dire qu'elle comprend généralement un système de réticulation adapté pour permettre la réticulation de la composition lors de sa cuisson (i.e., son durcissement). De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, plus préférentiellement compris entre 1 et 8 pce, l'accélérateur primaire de vulcanisation, par exemple un sulfénamide, est utilisé à un taux préférentiel compris entre 0,5 et 10 pce, plus préférentiellement compris entre 0,5 et 5,0 pce.

Mais l'invention s'applique également aux cas où la gomme de remplissage est dépourvue de soufre et même de tout autre système de réticulation, étant entendu que pourrait suffire, pour sa propre réticulation, le système de réticulation ou vulcanisation qui est présent dans la matrice de caoutchouc que le câble de l'invention est destiné à renforcer, et susceptible de migrer par contact de ladite matrice environnante vers la gomme de remplissage.

La gomme de remplissage peut comporter également, outre ledit système de réticulation, tout ou partie des additifs habituellement utilisés dans les matrices de caoutchouc destinées à la fabrication de pneumatiques, tels que par exemple des charges renforçantes comme le noir de carbone ou des charges inorganiques comme la silice, des agents de couplage, des agents anti-vieillissement, des antioxydants, des agents plastifiants ou des huiles d'extension, que ces derniers soient de nature aromatique ou non-aromatique, notamment des huiles très faiblement ou non aromatiques, par exemple du type naphténiques ou paraffiniques, à haute ou de préférence à basse viscosité, des huiles MES ou TDAE, des résines plastifiantes à haute Tg supérieure à 30°C, des agents facilitant la mise en oeuvre (processabilité) des compositions à l'état cru, des résines tackifiantes, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt, de nickel ou de lanthanide tels que décrits notamment dans la demande WO 2005/113666.

Le taux de charge renforçante, par exemple du noir de carbone ou une charge inorganique renforçante telle que silice, est de préférence supérieur à 50 pce, par exemple compris entre 60 et 140 pce. Il est plus préférentiellement supérieur à 70 pce, par exemple compris entre 70 et 120 pce. Comme noirs de carbone, par exemple, conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme charges inorganiques renforçantes conviennent notamment des charges minérales du type silice (SiO₂), notamment les silice précipitées ou pyrogénées présentant une surface BET inférieure à 450 m²/g, de préférence de 30 à 400 m²/g.

L'homme de l'art saura, à la lumière de la présente description, ajuster la formulation de la gomme de remplissage afin d'atteindre les niveaux de propriétés (notamment module d'élasticité) souhaités, et adapter la formulation à l'application spécifique envisagée.

Selon un premier mode de réalisation de l'invention, la formulation de la gomme de remplissage peut être choisie identique à la formulation de la matrice de caoutchouc que le câble de l'invention est destiné à renforcer ; ainsi, il n'y a aucun problème de compatibilité entre les matériaux respectifs de la gomme de remplissage et de ladite matrice de caoutchouc.

Selon un second mode de réalisation de l'invention, la formulation de la gomme de remplissage peut être choisie différente de la formulation de la matrice de caoutchouc que le câble de l'invention est destiné à renforcer. On pourra notamment ajuster la formulation de la gomme de remplissage en utilisant une quantité relativement élevée de promoteur d'adhésion, typiquement par exemple de 5 à 15 pce d'un sel métallique tel qu'un sel de cobalt, un sel de nickel ou un sel de néodyme, et en réduisant avantageusement la quantité dudit promoteur (voire en le supprimant totalement) dans la matrice de caoutchouc environnante.

De préférence, la gomme de remplissage présente, à l'état réticulé, un module sécant en extension E10 (à 10% d'allongement) qui est compris entre 5 et 25 MPa, plus préférentiellement entre 5 et 20 MPa, en particulier compris dans un domaine de 7 à 15 MPa. L'invention concerne bien entendu le câble précédemment décrit tant à l'état cru (sa gomme de remplissage étant alors non vulcanisée) qu'à l'état cuit (sa gomme de remplissage étant alors vulcanisée). On préfère toutefois utiliser le câble de l'invention avec une gomme de remplissage à l'état cru jusqu'à son incorporation ultérieure dans le produit semi-fini ou produit fini tel que pneumatique auquel il est destiné, de manière à favoriser la liaison au cours de la vulcanisation finale entre la gomme de remplissage et la matrice de caoutchouc environnante (par exemple la gomme de calandrage).

La figure 1 schématise, en coupe perpendiculaire à l'axe du câble (supposé rectiligne et au repos), un exemple d'un câble préférentiel 3+9 selon l'invention.

Ce câble (noté C-1) est du type compact, c'est-à-dire que ses couches interne Ci et externe Ce sont enroulées dans le même sens (S/S ou Z/Z selon une nomenclature reconnue) et de plus au même pas (p₁ = p₂). Ce type de construction a pour conséquence que les fils internes (10) et externes (11) forment deux couches concentriques qui ont chacune un contour (représenté en pointillés) sensiblement polygonal (triangulaire pour la couche Ci, hexagonal pour la couche Ce), et non cylindrique comme dans le cas des câbles à couches cylindiques qui seront décrits ultérieurement.

La gomme de remplissage (12) remplit le capillaire central (13) (symbolisé par un triangle) formé par les trois fils d'âme (10) en les écartant très légèrement, tout en recouvrant totalement la couche interne Ci formée par les trois fils (10). Elle remplit aussi chaque interstice ou cavité (symbolisé aussi par un triangle) formé soit par un fil d'âme (10) et les deux fils externes (11) qui lui sont immédiatement adjacents, soit par deux fils d'âme (10) et le fil externe (11) qui leur est adjacent ; au total, 12 interstices ou capillaires sont ainsi présents dans ce câble 3+9, auxquels s'ajoute le capillaire central (13).

Selon un mode de réalisation préférentiel, dans le câble 3+N de l'invention, la gomme de remplissage s'étend d'une manière continue autour de la couche Ci qu'elle recouvre.

Pour comparaison, la figure 2 rappelle la coupe d'un câble 3+9 (noté C-2) conventionnel (i.e., non gommé in situ), également du type compact. L'absence de gomme de remplissage fait que pratiquement tous les fils (20, 21) sont au contact l'un de l'autre, ce qui conduit à une structure particulièrement compacte, par ailleurs très difficilement pénétrable (pour ne pas dire impénétrable) de l'extérieur par du caoutchouc. La caractéristique de ce type de câble est que les trois fils d'âme (20) forment un canal ou capillaire central (23) qui est vide et fermé et donc propice, par effet "de mèche", à la propagation de milieux corrosifs tels que l'eau.

La figure 3 schématise un autre exemple d'un câble préférentiel 3+9 selon l'invention.

Ce câble (noté C-3) est du type à couches cylindriques, c'est-à-dire que ses couches interne Ci et externe Ce sont soit enroulées au même pas (p₁ = p₂) mais dans un sens différent (S/Z ou Z/S), soit enroulées à un pas différent (p₁ # p₂) quelles que soient les directions de torsion (S/S ou Z/Z ou S/Z ou Z/S). De manière connue, ce type de construction a pour conséquence que les fils sont disposés selon deux couches (Ci et Ce) adjacentes et concentriques, tubulaires, donnant au câble (et aux deux couches) un contour (représenté en pointillés) cylindrique et non plus polygonal.

La gomme de remplissage (32) remplit le capillaire central (33) (symbolisé par un triangle) formé par les trois fils d'âme (30) en les écartant légèrement, tout en recouvrant totalement la couche interne Ci formée par les trois fils (30). Elle remplit aussi, au moins en partie (ici, dans cet exemple, totalement) chaque interstice ou cavité formé soit par un fil d'âme (30) et les deux fils externes (31) qui lui sont immédiatement adjacents (les plus proches), soit par deux fils d'âme (30) et le fil externe (31) qui leur est adjacent ; au total, 12 interstices ou capillaires sont ainsi présents dans ce câble 3+9, auxquels s'ajoute le capillaire central (33).

Pour comparaison, la figure 4 rappelle la coupe d'un câble 3+9 (noté C-4) conventionnel (i.e., non gommé in situ), également du type à deux couches cylindriques. L'absence de gomme de remplissage fait que les trois fils (40) de la couche interne (Ci) sont pratiquement au contact l'un de l'autre, ce qui conduit à un capillaire central (43) vide et fermé, impénétrable de l'extérieur par du caoutchouc et propice d'autre part à la propagation de milieux corrosifs.

Egalement pour comparaison, la figure 5 schématise la coupe d'un câble 1+3+8 (noté C-5) conventionnel (i.e., non gommé in situ), également du type à deux couches cylindriques (Ci, Ce), qui comporte un fil noyau (55) de très faible diamètre, trois fils internes (50) et huit fils externes (51). Le fil noyau (55), en écartant les fils (50) de la couche interne Ci et en remplissant en quelque sorte le canal central formé par ces trois fils d'âme (50), permet de désaturer (en augmentant le diamètre de la couche interne Ci) la couche externe Ce (à diamètres de fils identiques d'une couche à l'autre) et d'augmenter ainsi la pénétrabilité externe du câble.

### II-2. Fabrication du câble 3+N

Le câble de construction 3+N précédemment décrit peut être fabriqué selon un procédé comportant les quatre étapes suivantes opérées en ligne :
- tout d'abord, une étape d'assemblage par retordage des trois fils d'âme, pour formation de la couche interne (Ci) en un point d'assemblage ;
- puis, en aval dudit point d'assemblage des trois fils d'âme, une étape de gainage de la couche interne (Ci) par la gomme de remplissage à l'état cru (c'est-à-dire non réticulée) ;
- suivie d'une étape d'assemblage par retordage des N fils de la couche externe (Ce) autour de la couche interne (Ci) ainsi gainée ;
- puis d'une étape d'équilibrage final des torsions.

On rappelle ici qu'il existe deux techniques possibles d'assemblage de fils métalliques :
- soit par câblage : dans un tel cas, les fils ne subissent pas de torsion autour de leur propre axe, en raison d'une rotation synchrone avant et après le point d'assemblage ;
- soit par retordage : dans un tel cas, les fils subissent à la fois une torsion collective et une torsion individuelle autour de leur propre axe, ce qui génère un couple de détorsion sur chacun des fils.

Une caractéristique essentielle du procédé ci-dessus est d'utiliser, tant pour l'assemblage de la couche interne que pour celui de la couche externe, une étape de retordage.

Au cours de la première étape, les trois fils d'âme sont retordus ensemble (direction S ou Z) pour formation de la couche interne Ci, de manière connue en soi ; les fils sont délivrés par des moyens d'alimentation tels que des bobines, une grille de répartition, couplée ou non à un grain d'assemblage, destinés à faire converger les fils d'âme en un point de torsion commun (ou point d'assemblage).

La couche interne (Ci) ainsi formée est ensuite gainée de gomme de remplissage à l'état cru, apportée par une vis d'extrusion à une température appropriée. La gomme de remplissage peut être ainsi délivrée en un point fixe, unique et de faible encombrement, au moyen d'une tête d'extrusion unique, sans faire appel à un gainage individuel des fils en amont des opérations d'assemblage, avant formation de la couche interne, comme décrit dans l'art antérieur.

Ce procédé a l'avantage notable de ne pas ralentir le procédé d'assemblage conventionnel. Il rend possible l'opération complète de retordage initial, gommage et retordage final en ligne et en une seule étape, quel que soit le type de câble produit (câble compact comme câble à couches cylindriques), tout ceci à haute vitesse. Le procédé ci-dessus peut être mis en oeuvre à une vitesse (vitesse de défilement du câble sur la ligne de retordage-gommage) supérieure à 70 m/min, préférentiellement supérieure à 100 m/min.

En amont de la tête d'extrusion, la tension exercée sur les trois fils, sensiblement identique d'un fil à l'autre, est préférentiellement comprise entre 10 et 25% de la force rupture des fils.

La tête d'extrusion peut comporter une ou plusieurs filières, par exemple une filière amont de guidage et une filière aval de calibrage. On peut ajouter des moyens de mesure et de contrôle en continu du diamètre du câble, reliés à l'extrudeuse. De préférence, la température d'extrusion de la gomme de remplissage est comprise entre 60°C et 120°C, plus préférentiellement comprise entre 70°C et 110°C.

La tête d'extrusion définit ainsi une zone de gainage ayant la forme d'un cylindre de révolution dont le diamètre est compris de préférence entre 0,4 mm et 1,2 mm, plus préférentiellement entre 0,5 et 1,0 mm, et dont la longueur est de préférence comprise entre 4 et 10 mm.

La quantité de gomme de remplissage délivrée par la tête d'extrusion peut être ajustée aisément de telle manière que, dans le câble 3+N final, cette quantité soit comprise entre 5 et 30 mg, de préférence entre 5 et 25 mg, notamment dans un domaine de 10 à 20 mg par g de câble.

Typiquement, en sortie de la tête d'extrusion, la couche interne Ci, en tout point de sa périphérie, est recouverte d'une épaisseur minimale de gomme de remplissage qui est préférentiellement supérieure à 5 µm, plus préférentiellement supérieure à 10 µm, par exemple comprise entre 10 et 50 µm.

En sortie de l'étape de gainage qui précède, au cours d'une troisième étape, on procède à l'assemblage final, toujours par retordage (direction S ou Z), des N fils de la couche externe (Ce) autour de la couche interne (Ci) ainsi gainée. Au cours du retordage, les N fils viennent s'appuyer sur la gomme de remplissage, s'incruster dans cette dernière. La gomme de remplissage, en se déplaçant sous la pression exercée par ces fils externes, a alors naturellement tendance à remplir, au moins en partie, chacun des interstices ou cavités laissés vides par les fils, entre la couche interne (Ci) et la couche externe (Ce).

A ce stade, le câble 3+N de l'invention n'est pas terminé : son canal central, délimité par les trois fils d'âme, n'est pas encore rempli de gomme de remplissage, en tout cas de manière insuffisante pour l'obtention d'une imperméabilité à l'air qui soit acceptable.

L'étape essentielle qui suit consiste à faire passer le câble à travers des moyens d'équilibrage de torsion. Par "équilibrage de torsion", on entend ici de manière connue l'annulation des couples de torsion résiduels (ou du retour élastique de détorsion) s'exerçant sur chaque fil du câble, dans la couche interne comme dans la couche externe.

Les outils d'équilibrage de la torsion sont bien connus de l'homme du métier du retordage ; ils peuvent consister par exemple en des "dresseurs", "retordeurs" ou "retordeurs-dresseurs" constitués soit de poulies pour les retordeurs, soit de galets de petit diamètre pour les dresseurs, poulies et/ou galets à travers lesquels circule le câble.

On suppose a posteriori que, lors du passage à travers cet outil d'équilibrage, la détorsion s'exerçant sur les trois fils d'âme, entraînant une rotation inverse, au moins partielle, de ces derniers autour de leur axe, est suffisante pour forcer, pour entraîner la gomme de remplissage à l'état cru (i.e., non réticulée, non cuite) encore chaude et relativement fluide de l'extérieur vers le coeur du câble, à l'intérieur même du canal central formé par les trois fils, offrant *in fine* au câble de l'invention l'excellente propriété d'imperméabilité à l'air qui le caractérise. La fonction de dressage en plus, apporté par l'utilisation d'un outil dresseur, aurait pour avantage que le contact des galets du dresseur avec les fils de la couche externe va exercer une pression supplémentaire sur la gomme de remplissage favorisant encore sa pénétration dans le capillaire central formé par les trois fils d'âme.

En d'autres termes, le procédé décrit ci-dessus exploite la rotation des trois fils d'âme, au stade final de fabrication du câble, pour répartir naturellement, de manière homogène, la gomme de remplissage à l'intérieur et autour de la couche interne (Ci), tout en contrôlant parfaitement la quantité de gomme de remplissage fournie.

Ainsi, de manière inattendue, il s'est avéré possible de faire pénétrer la gomme de remplissage au coeur même du câble de l'invention, en déposant la gomme en aval du point d'assemblage des trois fils et non en amont comme décrit dans l'art antérieur, tout en contrôlant et en optimisant la quantité de gomme de remplissage délivrée grâce à l'emploi d'une tête d'extrusion unique.

Après cette étape ultime d'équilibrage de la torsion, la fabrication du câble de l'invention est terminée. Ce câble peut être enroulé sur une bobine de réception, pour stockage, avant d'être traité par exemple à travers une installation de calandrage, pour préparation d'un tissu composite métal-caoutchouc.

Le procédé décrit ci-dessus rend possible la fabrication de câbles conformes à l'invention qui sont dépourvus de gomme de remplissage à leur périphérie. Par une telle expression, on entend qu'aucune particule de gomme de remplissage n'est visible, à l'oeil nu, à la périphérie du câble, c'est-à-dire que l'homme du métier ne fait pas de différence en sortie de fabrication, à l'oeil nu et à une distance de deux ou trois mètres, entre une bobine de câble conforme à l'invention et une bobine de câble conventionnel non gommé in situ.

Ce procédé s'applique bien entendu à la fabrication de câbles du type compacts (pour rappel et par définition, ceux dont les couches Ci et Ce sont enroulées au même pas et dans le même sens) comme de câbles du type à couches cylindriques (pour rappel et par définition, ceux dont les couches Ci et Ce sont enroulées soit à des pas différents, soit dans des sens opposés, soit encore à des pas différents et dans des sens opposés).

Un dispositif d'assemblage et gommage utilisable pour la mise en oeuvre du procédé précédemment décrit est un dispositif comportant d'amont en aval, selon la direction d'avancement d'un câble en cours de formation :
- des moyens d'alimentation des trois fils d'âme ;
- des moyens d'assemblage par retordage des trois fils d'âme pour formation de la couche interne ;
- des moyens de gainage de la couche interne ;
- en sortie de moyens de gainage, des moyens d'assemblage par retordage de fils externes autour de la couche interne ainsi gainée, pour formation de la couche externe ;
- enfin, des moyens d'équilibrage de torsion.

On voit sur la figure 6 un exemple de dispositif (60) d'assemblage par retordage, du type à alimentation fixe et à réception tournante, utilisable pour la fabrication d'un câble du type compact (p₂ = p₃ et même sens de torsion des couches Ci et Ce) tel qu'illustré par exemple à la figure 1. Dans ce dispositif; des moyens d'alimentation (610) délivrent trois fils d'âme (61) à travers une grille (62) de répartition (répartiteur axisymétrique), couplée ou non à un grain d'assemblage (63), au-delà de laquelle convergent les trois fils d'âme en un point d'assemblage (64), pour formation de la couche interne (Ci).

La couche interne Ci, une fois formée, traverse ensuite une zone de gainage consistant par exemple en une tête d'extrusion unique (65) à travers laquelle est destinée à circuler la couche interne. La distance entre le point de convergence (64) et le point de gainage (65) est par exemple comprise entre 50 cm et 1 m. Autour de la couche interne Ci ainsi gommée (66), progressant dans le sens de la flèche, sont ensuite assemblés par retordage les N fils (67) de la couche externe (Ce), par exemple au nombre de neuf, délivrés par des moyens d'alimentation (670). Le câble final 3+N ainsi formé est finalement collecté sur une réception tournante (69), après traversée des moyens d'équilibrage de torsion (68) consistant par exemple en un retordeur-dresseur.

On rappelle ici que, de manière bien connue de l'homme du métier, pour la fabrication d'un câble selon l'invention du type à couches cylindriques tel qu'illustré par exemple à la figure 3 (pas p₂ et p₃ différents et/ou sens de torsion différents des couches Ci et Ce), on utilisera un dispositif comportant deux organes (alimentation ou réception) tournants, et non un seul comme décrit ci-dessus (Fig. 6) à titre d'exemple.

### II-3. Utilisation du câble en armature sommet de pneumatique

Comme expliqué en introduction du présent mémoire, le câble de l'invention est particulièrement destiné à une armature de sommet de pneumatique pour véhicules industriels tels que véhicules poids lourds.

A titre d'exemple, la figure 7 représente de manière schématique une coupe radiale d'un pneumatique à armature de sommet métallique pouvant être conforme ou non à l'invention, dans cette représentation générale. Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Le pneumatique conforme à l'invention est caractérisé en ce que sa ceinture 6 comporte au moins, à titre de renforcement d'au moins une des nappes de ceinture, un câble métallique à deux couches conforme à l'invention. Dans cette ceinture 6 schématisée de manière très simple sur la figure 7, on comprendra que les câbles de l'invention peuvent par exemple renforcer tout ou partie des nappes de ceinture dites de travail. Bien entendu, ce pneumatique 1 comporte en outre de manière connue une couche de gomme ou élastomère intérieure (communément appelée "gomme intérieure") qui définit la face radialement interne du pneumatique et qui est destinée à protéger la nappe de carcasse de la diffusion d'air provenant de l'espace intérieur au pneumatique.

Dans cette nappe de ceinture, la densité des câbles conformes à l'invention est de préférence comprise entre 15 et 110 câbles par dm (décimètre) de nappe de ceinture, plus préférentiellement entre 30 et 70 câbles par dm de nappe, la distance entre deux câbles adjacents, d'axe en axe, étant de préférence comprise entre 1,2 et 6,5 mm, plus préférentiellement comprise entre 1,3 et 3,0 mm.

Les câbles conformes à l'invention sont de préférence disposés de telle manière que la largeur (notée L) du pont de caoutchouc, entre deux câbles adjacents, est comprise entre 0,4 et 2,0 mm. Cette largeur L représente de manière connue la différence entre le pas de calandrage (pas de pose du câble dans le tissu de caoutchouc) et le diamètre du câble. En dessous de la valeur minimale indiquée, le pont de caoutchouc, trop étroit, risque de se dégrader mécaniquement lors du travail de la nappe, notamment au cours des déformations subies dans son propre plan par extension ou cisaillement. Au-delà du maximum indiqué, on s'expose à des risques d'apparition de pénétration d'objets, par perforation, entre les câbles. Plus préférentiellement, pour ces mêmes raisons, la largeur L est choisie comprise entre 0,6 et 1,6 mm.

De préférence, la composition de caoutchouc utilisée pour le tissu de la nappe de ceinture présente, à l'état vulcanisé (i.e., après cuisson), un module sécant en extension E10 qui est compris entre 5 et 25 MPa, plus préférentiellement entre 5 et 20 MPa, notamment dans un domaine de 7 à 15 MPa, lorsque ce tissu est destiné à former une nappe de travail de la ceinture.

### III. EXEMPLES DE REALISATION DE L'INVENTION

Les essais qui suivent démontrent la capacité de l'invention à fournir des câbles dont l'endurance, en ceinture de pneumatique, est notablement augmentée grâce à une excellente propriété d'imperméabilité à l'air, selon leur axe longitudinal.

### III-1. Nature et propriétés des fils et câbles utilisés

On utilise dans les essais qui suivent des câbles à couches de constructions 3+9 ou 1+3+8 telles que schématisés aux figures 1 et 5, constitués de fils fins en acier au carbone revêtus de laiton.

Les fils en acier au carbone sont préparés de manière connue, en partant par exemple de fils machine (diamètre 5 à 6 mm) que l'on écrouit tout d'abord, par laminage et/ou tréfilage, jusqu'à un diamètre intermédiaire voisin de 1 mm. L'acier utilisé pour le câble C-1 conforme à l'invention est un acier au carbone du type à très haute résistance (dit SHT pour " *Super High Tensile* ") dont la teneur en carbone est de 0,92% environ, comportant 0,2% de chrome environ, le reste étant constitué de fer et des impuretés inévitables habituelles liées au procédé de fabrication de l'acier. Celui utilisé pour le câble témoin C-5 est un acier au carbone du type à haute résistance (dit HT pour *" High Tensile* ") dont la teneur en carbone est de 0,82% environ, comportant 0,5% de manganèse environ (reste constitué de fer et des impuretés). Les fils de diamètre intermédiaire subissent un traitement de dégraissage et/ou décapage, avant leur transformation ultérieure. Après dépôt d'un revêtement de laiton sur ces fils intermédiaires, on effectue sur chaque fil un écrouissage dit "final" (i.e., après le dernier traitement thermique de patentage), par tréfilage à froid en milieu humide avec un lubrifiant de tréfilage qui se présente par exemple sous forme d'une émulsion ou d'une dispersion aqueuses.

Les fils en acier ainsi tréfilés ont le diamètre et les propriétés mécaniques suivantes :

**Tableau 1**

| Acier | φ (mm) | Fm (N) | Rm (MPa) |
|---|---|---|---|
| SHT | 0,30 | 226 | 3200 |
| HT | 0,35 | 263 | 2765 |

Le revêtement de laiton qui entoure les fils a une épaisseur très faible, nettement inférieure au micromètre, par exemple de l'ordre de 0,15 à 0,30 µm, ce qui est négligeable par rapport au diamètre des fils en acier. Bien entendu, la composition de l'acier du fil en ses différents éléments (par exemple C, Cr, Mn) est la même que celle de l'acier du fil de départ.

Ces fils sont ensuite assemblés sous forme de câbles à couches 3+9 (référencés C-1 à la Fig. 1) et 1+3+8 (référencés C-5 à la Fig. 5), dont la construction est conforme aux représentations des figures 1 et 5, respectivement, et dont les propriétés mécaniques sont données dans le tableau 2.

**Tableau 2**

| Câble | p₁ (mm) | p₂ (mm) | Fm (daN) | Rm (MPa) | At (%) |
|---|---|---|---|---|---|
| C-1 | 15.4 | 15.4 | 258 | 3140 | 2.5 |
| C-5 | 7.7 | 15.4 | 274 | 2590 | 2.5 |

Le câble de l'invention 3+9 (C-1), tel que schématisé à la Fig. 1, est formé de 12 fils au total, tous de diamètre 0,30 mm, qui ont été enroulés au même pas (p₁ = p₂ = 15,4 mm) et dans la même direction de torsion (S) pour l'obtention d'un câble du type compact. Le taux de gomme de remplissage, mesuré selon la méthode indiquée précédemment au paragraphe 1-3, est de 16 mg par g de câble. Cette gomme de remplissage remplit le canal ou capillaire central formé par les trois fils d'âme en les écartant légèrement, tout en recouvrant totalement la couche interne Ci formée par les trois fils. Elle remplit aussi, au moins en partie sinon totalement, chacun des douze interstices ou capillaires formés soit par un fil d'âme et les deux fils externes qui lui sont immédiatement adjacents, soit par deux fils d'âme et le fil externe qui leur est adjacent.

Pour la fabrication de ce câble, on a utilisé un dispositif tel que décrit précédemment et schématisé à la figure 6. La gomme de remplissage est une composition de caoutchouc conventionnelle pour armature sommet de pneumatique, ayant la même formulation que celle de la nappe de caoutchouc de ceinture que le câble C-1 est destiné à renforcer dans l'essai qui suit. Cette composition a été extrudée à une température de 90°C à travers une filière de calibrage de 0,700 mm.

Le câble témoin 1+3+8 (C-5), tel que schématisé à la Fig. 5, est formé de 12 fils au total, dont 11 fils de diamètre 0,35 mm. Il comporte une couche interne Ci de 3 fils enroulés ensemble en hélice (direction S) selon un pas p₁ égal à 7,7 mm, cette couche Ci étant au contact d'une couche externe cylindrique de 8 fils eux-mêmes enroulés ensemble en hélice (direction S) autour de l'âme selon un pas p₂ égal à 15,4 mm. Grâce à son fil noyau unitaire de très petit diamètre (0,12 mm), les fils de la couche interne Ci sont écartés ; le câble devient pénétrable de l'extérieur jusqu'en son centre. Ce câble C-5 témoin est dépourvu de gomme de remplissage.

### III-2. Endurance en pneumatique

Les câbles à couches C-1 et C-5 sont ensuite incorporés par calandrage à des nappes (skims) de caoutchouc constituées d'une composition utilisée conventionnellement pour la fabrication des nappes de ceinture de pneumatiques radiaux pour véhicules poids lourd. Cette composition est à base de caoutchouc naturel (peptisé) et de noir de carbone N330 (55 pce) ; elle comporte en outre les additifs usuels suivants: soufre (6 pce), accélérateur sulfénamide (1 pce), ZnO (9 pce), acide stéarique (0,7 pce), antioxydant (1,5 pce), naphténate de cobalt (1 pce) ; le module E10 de la gomme de remplissage est de 6 MPa environ.

Les tissus composites ainsi calandrés comportent donc une matrice de caoutchouc formée de deux couches fines (épaisseur 0,8 mm environ) de gomme superposées de part et d'autre des câbles. Le pas de calandrage (pas de pose des câbles dans le tissu de caoutchouc) est de 2,5 mm environ. Compte tenu du diamètre des câbles (respectivement 1,3 et 1,5 mm environ pour les câbles C-1 et C-5), l'épaisseur de gomme au dos des câbles est comprise entre 0,4 et 0,6 mm environ.

On réalise ensuite deux séries d'essais de roulage de pneumatiques de véhicule poids lourd (notées P-1 et P-5), de dimensions 315/80 R22.5, avec dans chaque série des pneumatiques destinés au roulage, d'autres à un décorticage sur pneumatique neuf.

Les pneus P-1 renforcés par les câbles C-1 de l'invention sont donc les pneumatiques conformes à l'invention. Les pneumatiques P-5 renforcés par les câbles C-5 constituent les pneus témoins de l'art antérieur ; ils constituent, en raison de leurs performances reconnues, un témoin de choix pour cet essai, notamment comparativement à des câbles 3+9 conventionnels (sans fil noyau unitaire).

Les pneumatiques P-1 et P-5 sont donc identiques à l'exception des câbles C-1 et C-5 qui renforcent leur ceinture 6.

Leur armature de sommet ou ceinture 6, en particulier, est de manière connue en soi constituée de deux demi-nappes de triangulation renforcées de câbles métalliques inclinés de 65 degrés, surmontées de deux "nappes de travail" superposées croisées. Ces nappes de travail sont renforcées par les câbles métalliques ci-dessus (respectivement C-1 et C-5) disposés sensiblement parallèlement les uns par rapport aux autres et inclinés de 26 degrés (nappe radialement interne) et 18 degrés (nappe radialement externe). Les deux nappes de travail sont par ailleurs recouvertes par une nappe de protection renforcée de câbles métalliques élastiques (haute élongation) conventionnels inclinés de 18 degrés. Tous les angles d'inclinaison indiqués sont mesurés par rapport au plan circonférentiel médian.

On fait subir à ces pneumatiques un essai de roulage sévère, en surcharge, destiné à tester leur résistance au phénomène de clivage (séparation des extrémités des nappes de ceinture), en soumettant les pneumatiques, sur une machine de roulage automatique, à des séquences de très forte dérive et mise en compression sévère de leur bloc sommet dans la zone d'épaule.

Le test est conduit jusqu'à la destruction forcée des pneumatiques. On constate alors que les pneumatiques P-1 renforcés par les câbles de l'invention, dans les conditions très sévères de roulage qui leur sont imposées, présentent une endurance nettement améliorée : la distance moyenne parcourue est augmentée de 20% par rapport aux pneumatiques témoins montrant déjà par ailleurs une performance excellente.

### III-3. Tests de perméabilité à l'air

Les câbles C-1 de l'invention ont été par ailleurs soumis au test de perméabilité à l'air décrit au paragraphe 1-2, en mesurant le volume d'air (en cm³) traversant les câbles en 1 minute (moyenne de 10 mesures pour chaque câble testé).

Pour chaque câble C-1 testé et pour 100% des mesures (soit dix éprouvettes sur dix), on a mesuré un débit nul ou inférieur à 0,2 cm³/min ; en d'autres termes, les câbles de l'invention peuvent être qualifiés d'étanches à l'air selon leur axe ; ils présentent donc un taux de pénétration optimal par le caoutchouc.

Des câbles gommés in situ témoins, de même construction que les câbles compacts C-1 de l'invention, ont été préparés en gainant individuellement soit un seul fil, soit chacun des trois fils de la couche interne Ci. Ce gainage a été réalisé à l'aide de filières d'extrusion de diamètre variable (320 à 420 µm) disposées cette fois en amont du point d'assemblage (gainage et retordage en ligne) comme décrit dans l'art antérieur (demande US 2002/160213 précitée) ; pour une comparaison rigoureuse, on a ajusté d'autre part la quantité de gomme de remplissage de telle manière que le taux de gomme de remplissage, dans les câbles finaux (entre 6 et 25 mg/g de câble, mesuré selon la méthode du paragraphe 1-3), soit voisin de celui des câbles de l'invention.

Dans le cas du gainage d'un seul fil, quel que soit le câble testé, on a observé que 100% des mesures (i.e., 10 éprouvettes sur 10) indiquaient un débit d'air supérieur à 2 cm³/min ; le débit moyen mesuré variait de 16 à 62 cm³/min selon les conditions opératoires utilisées, notamment le diamètre de filière d'extrusion testé.

Dans le cas du gainage individuel des trois fils, même si le débit moyen mesuré (variant de 0,2 à 4 cm³/min) s'est révélé inférieur aux valeurs précédentes, on a observé que :
- dans le plus mauvais des cas (filière de 320 µm), 90% des mesures (soit 9 éprouvettes sur 10) présentaient un débit supérieur à 2 cm³/min, avec un débit moyen de 4 cm³/min ;
- dans le meilleur des cas (filière de 420 µm), 10% des mesures (soit 1 éprouvette sur 10) présentait encore un débit d'environ 2 cm³/min, avec un débit moyen voisin de 0,2 cm³/min.

En d'autres termes, aucun des câbles témoins ci-dessus testés ne peut être qualifié de câble étanche à l'air selon son axe longitudinal, au sens du test du paragraphe 1-2. En outre, ceux présentant la perméabilité à l'air la plus faible présentaient une quantité relativement importante de gomme de remplissage à leur périphérie, les rendant inaptes à une opération de calandrage en conditions industrielles.

Bien entendu, l'invention n'est pas limitée aux exemples de réalisation précédemment décrits.

C'est ainsi par exemple que le câble de l'invention pourrait être utilisé pour le renforcement d'articles autres que des pneumatiques, par exemple des tuyaux, des courroies, des bandes transporteuses ; avantageusement, il pourrait être utilisé aussi pour le renforcement de parties des pneumatiques autres que leur armature de sommet, notamment pour le renforcement de l'armature de carcasse de pneumatiques pour véhicules industriels tels que poids lourd.

L'invention concerne également tout câble d'acier multi-torons ("*multi-strand rope*") dont la structure incorpore au moins, en tant que toron élémentaire, un câble à couches conforme à l'invention.

A titre d'exemples de câbles multi-torons conformes à l'invention, utilisables par exemple dans des pneumatiques pour véhicules industriels du type génie civil, on peut citer notamment des câbles multi-torons de construction :
- (1+6) (3+N) formé au total de sept torons élémentaires, un au centre et les six autres câblés autour du centre ;
- (3+9) (3+N) formé au total de douze torons élémentaires, trois au centre et les neuf autres câblés autour du centre,
dans lesquels chaque toron élémentaire constitué par un câble à couches 3+N, notamment 3+8 ou 3+9, du type compact comme du type à couches cylindriques, est un toron conforme à l'invention.

De tels câbles d'acier multi-torons, notamment du type (1+6) (3+N) ou (3+9) (3+N), pourraient être eux-mêmes gommés in situ lors de leur fabrication.

## Revendications

1. Câble métallique à deux couches (Ci, Ce) de construction 3+N, gommé in situ, comportant une couche interne (Ci) constituée de trois fils d'âme de diamètre d₁ enroulés ensemble en hélice selon un pas p₁ et une couche externe (Ce) de N fils, N variant de 6 à 12, de diamètre d₂ enroulés ensemble en hélice selon un pas p₂ autour de la couche interne (Ci), ledit câble étant **caractérisé en ce qu'**il présente les caractéristiques suivantes (d₁, d₂, p₁, p₂ en mm) :
- 0,20 < d₁ < 0,50 ;
- 0,20 < d₂ < 0,50 ;
- p₁ / p₂ ≤ 1 ;
- 5 < p₁ < 30 ;
- 10 < p₂ < 30 ;
- la couche interne est gainée par une composition de caoutchouc diénique dite "gomme de remplissage" qui, pour toute longueur de câble d'au moins 2 cm, est présente dans le canal central formé par les trois fils d'âme et dans chacun des interstices situés entre les trois fils d'âme et les N fils de la couche externe (Ce) ;
- le taux de gomme de remplissage dans le câble est compris entre 5 et 30 mg par gramme de câble;
- le câble est dépourvu de gomme de remplissage à sa périphérie.

2. Câble selon la revendication 1, dans lequel l'élastomère diénique de la gomme de remplissage est choisi dans le groupe constitué par les polybutadiènes, le caoutchouc naturel, les polyisoprènes de synthèse, les copolymères de butadiène, les copolymères d'isoprène, et les mélanges de ces élastomères.

3. Câble selon la revendication 2, dans lequel l'élastomère diénique est du caoutchouc naturel.

4. Câble selon l'une quelconque des revendications 1 à 3, dans lequel les caractéristiques suivantes sont vérifiées (d₁, d₂ en mm) :
- 0,23 < d₁ ≤ 0,40 ;
- 0,23 < d₂ ≤ 0,40 .

5. Câble selon l'une quelconque des revendications 1 à 4, dans lequel la caractéristique suivante est vérifiée :
0,5 ≤ p₁ / p₂ ≤ 1.

6. Câble selon l'une quelconque des revendications 1 à 5, dans lequel p₁ = p₂.

7. Câble selon la revendication 6, dans lequel p₂ est compris dans un domaine de 12 à 25 mm.

8. Câble selon l'une quelconque des revendications 1 à 7, dans lequel les fils de la couche externe (Ce) sont enroulés en hélice au même pas et dans le même sens de torsion que les fils de la couche interne (Ci).

9. Câble selon l'une quelconque des revendications 1 à 8, dans lequel la couche externe est une couche saturée.

10. Câble selon l'une quelconque des revendications 1 à 9, dans lequel la couche externe (Ce) comporte 8, 9 ou 10 fils, de préférence 9 fils.

11. Câble selon l'une quelconque des revendications 1 à 10, dans lequel le taux de gomme de remplissage est compris entre 5 et 25 mg par g de câble, de préférence compris dans un domaine de 10 à 20 mg par g de câble.

12. Câble selon l'une quelconque des revendications 1 à 11, **caractérisé en ce que**, au test de perméabilité à l'air selon le paragraphe 1-2, il présente un débit d'air moyen inférieur à 2 cm³/min, de préférence inférieur à 0,2 cm³/min.

13. Câble multi-torons dont au moins un des torons est un câble selon l'une quelconque des revendications 1 à 12.

14. Pneumatique comportant un câble selon l'une quelconque des revendications 1 à 13.

15. Pneumatique selon la revendication 14, ledit pneumatique étant un pneumatique de véhicule industriel et le câble étant présent dans la ceinture du pneumatique.

## Patentansprüche

1. Metallkabel mit zwei Schichten (Ci, Ce) mit einem 3+N-Aufbau, in-situ-gummiert, das eine innere Schicht (Ci), die aus drei Kerndrähten mit einem Durchmesser d₁ besteht, die zusammen schraubenförmig gemäß einer Steigung p₁ gewickelt sind, und eine äußere Schicht (Ce) von N Drähten, wobei N von 6 bis 12 variiert, mit einem Durchmesser d₂ aufweist, die zusammen schraubenförmig gemäß einer Steigung p₂ um die innere Schicht (Ci) gewickelt sind, wobei das Kabel **dadurch gekennzeichnet ist, dass** es die folgenden Merkmale (d₁, d₂, p₁, p₂ in mm) hat:
- 0,20 < d₁ < 0,50;
- 0,20 < d₂ < 0,50;
- p₁ / p₂ ≤ 1;
- 5 < p₁ < 30;
- 10 < p₂ < 30;
- die innere Schicht mit einer Dien-Kautschuk-Zusammensetzung umhüllt ist, "Füllgummi" genannt, die für jede Kabellänge von mindestens 2 cm im von den drei Kerndrähten geformten zentralen Kanal und in jedem der Zwischenräume vorhanden ist, die sich zwischen den drei Kerndrähten und den N Drähten der äußeren Schicht (Ce) befinden;
- der Füllgummianteil im Kabel zwischen 5 und 30 mg pro Gramm Kabel ist;
- das Kabel an seinem Umfang keinen Füllgummi aufweist.

2. Kabel nach Anspruch 1, wobei das Dienelastomer des Füllgummis aus der Gruppe ausgewählt wird, die aus den Polybutadienen, dem natürlichen Kautschuk, den synthetischen Polyisoprenen, den Butadien-Copolymeren, den Isopren-Copolymeren und den Mischungen dieser Elastomermaterialien besteht.

3. Kabel nach Anspruch 2, wobei das Dienelastomer natürlicher Kautschuk ist.

4. Kabel nach einem der Ansprüche 1 bis 3, wobei die folgenden Merkmale erfüllt sind (d₁, d₂ in mm) :
- 0,23 ≤ d₁ ≤ 0,40;
- 0,23 ≤ d₂ ≤ 0,40.

5. Kabel nach einem der Ansprüche 1 bis 4, wobei das folgende Merkmal erfüllt ist:
0,5 ≤ p₁ / p₂ ≤ 1.

6. Kabel nach einem der Ansprüche 1 bis 5, wobei gilt p₁ = p₂.

7. Kabel nach Anspruch 6, wobei p₂ in einem Bereich von 12 bis 25 mm liegt.

8. Kabel nach einem der Ansprüche 1 bis 7, wobei die Drähte der äußeren Schicht (Ce) mit der gleichen Steigung und in der gleichen Torsionsrichtung wie die Drähte der inneren Schicht (Ci) schraubenförmig gewickelt sind.

9. Kabel nach einem der Ansprüche 1 bis 8, wobei die äußere Schicht eine gesättigte Schicht ist.

10. Kabel nach einem der Ansprüche 1 bis 9, wobei die äußere Schicht (Ce) 8, 9 oder 10 Drähte, vorzugsweise 9 Drähte aufweist.

11. Kabel nach einem der Ansprüche 1 bis 10, wobei der Füllgummianteil zwischen 5 und 25 mg pro g Kabel, vorzugsweise in einem Bereich von 10 bis 20 mg pro g Kabel liegt.

12. Kabel nach einem der Ansprüche 1 bis 11, **dadurch gekennzeichnet, dass** es beim Luftdurchlässigkeitstest gemäß dem Absatz I-2 einen mittleren Luftdurchsatz von weniger als 2 cm³/min, vorzugsweise weniger als 0,2 cm³/min hat.

13. Viellitzenkabel, wobei mindestens eine der Litzen ein Kabel nach einem der Ansprüche 1 bis 12 ist.

14. Luftreifen, der ein Kabel nach einem der Ansprüche 1 bis 13 aufweist.

15. Luftreifen nach Anspruch 14, wobei der Luftreifen ein Luftreifen eines Nutzfahrzeugs ist und das Kabel im Gürtel des Luftreifens vorhanden ist.

## Claims

1. Metal cord consisting of two layers (Ci, Ce) of 3+N construction, rubberized *in situ,* comprising an inner layer (Ci) formed from three core wires of diameter d₁ wound together in a helix with a pitch p₁ and an outer layer (Ce) of N wires, N varying from 6 to 12, of diameter d₂, which are wound together in a helix with a pitch p₂ around the inner layer (Ci), said cord being **characterized in that** it has the following characteristics (d₁, d₂, p₁ and p₂ are expressed in mm) :
- 0.20 < d₁ < 0.50 ;
- 0.20 < d₂ < 0.50 ;
- p₁ / p₂ ≤ 1 ;
- 5 < p₁ < 30 ;
- 10 < p₂ < 30 ;
- the inner layer is sheathed with a diene rubber composition called a "filling rubber " which, for any length of cord of at least 2 cm, is present in the central channel formed by the three core wires and in each of the gaps lying between the three core wires and the N wires of the outer layer (Ce) ; and
- the content of filling rubber in the cord is between 5 and 30 mg per g of cord;
- the cord has no filling rubber on its periphery.

2. Cord according to Claim 1, in which the diene elastomer of the filling rubber is chosen from the group formed by polybutadienes, natural rubber, synthetic polyisoprenes, butadiene copolymers, isoprene copolymers and blends of these elastomers.

3. Cord according to Claim 2, in which the diene elastomer is natural rubber.

4. Cord according to any one of Claims 1 to 3, in which the following relationships are satisfied (d₁ and d₂ being in mm) :
- 0.23 ≤ d₁ ≤ 0.40 ;
- 0.23 ≤ d₂ ≤ 0.40 .

5. Cord according to any one of Claims 1 to 4, in which the following relationship is satisfied:
0.5 ≤ p₁ / p₂ ≤ 1.

6. Cord according to any one of Claims 1 to 5, in which p₁ = p₂.

7. Cord according to Claim 6, in which p₂ lies in the range from 12 to 25 mm.

8. Cord according to any one of Claims 1 to 7, in which the wires of the outer layer (Ce) are wound in a helix with the same pitch and in the same direction of twist as the wires of the inner layer (Ci).

9. Cord according to any one of Claims 1 to 8, in which the outer layer is a saturated layer.

10. Cord according to any one of Claims 1 to 9, in which the outer layer (Ce) comprises 8, 9 or 10 wires, preferably 9 wires.

11. Cord according to any one of Claims 1 to 10, in which the content of filling rubber is between 5 and 25 mg per g of cord, preferably in the range from 10 to 20 mg per g of cord.

12. Cord according to any one of Claims 1 to 11, **characterized in that**, in the air permeability test of Section 1-2, it has an average air flow rate of less than 2 cm³/min, preferably of less than 0.2 cm³/min.

13. Multistrand cord, at least one of the strands of which is a cord according to any one of Claims 1 to 12.

14. Tyre comprising a cord according to any one of Claims 1 to 13.

15. Tyre according to Claim 14, said tyre being an industrial vehicle tyre and the cord being present in the belt of the tyre.
